(19)

Europäisches
Patentamt
European
Patent Office
Office européen
des brevets

(11) **EP 2 413 269 A1**

(12) **EUROPEAN PATENT APPLICATION**

(43) Date of publication:
**01.02.2012 Bulletin 2012/05**

(51) Int Cl.:
**G06N 99/00** *(2010.01)*

(21) Application number: **10360032.6**

(22) Date of filing: **30.07.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO SE SI SK SM TR**<br>Designated Extension States:<br>**BA ME RS** | (72) Inventors:<br>• **Razavi, Rouzbeh**<br>  **Dublin 15 (IE)**<br>• **Claussen, Holger**<br>  **Straffan**<br>  **Co Kildare (IE)** |
| (71) Applicant: **Alcatel Lucent**<br>**75007 Paris (FR)** | (74) Representative: **Leppard, Andrew John et al**<br>**Bryer, Shelley, John Amor, Greenwood LLP**<br>**7 Gay Street**<br>**Bath BA1 2PH (GB)** |

(54) **Controller**

(57) A controller operable to generate control signals to control system components, a method of generating control signals to control system components and a computer program product are disclosed. The controller is operable to generate control signals to control system components and comprises: fuzzy logic operable to receive information relating to operation of the system components and to generate a fuzzy state representation of the information; rules logic operable to apply the fuzzy state representation to a plurality of state-action pairs, each state-action pair having a ranking indicating an appropriateness of each action for that state, a triggered set of the plurality of state-action pairs triggering in response to the fuzzy state representation, each of the triggered set of the plurality of state-action pairs have an action output determined by its ranking and an associated strength; aggregation logic operable to determine an aggregated action output representative of the action outputs and associated strengths of the triggered set of state-action pairs, the aggregated action output being used to generate the control signals; and ranking update logic operable to update the ranking of state-action pairs which have a state corresponding with the states of the triggered set of state-action pairs and which have at least one action output equivalent to the aggregated action output. Hence, only those state-action pairs aligned with the eventual aggregated outputs are updated. This significantly improves the efficiency of the learning process, as not only are the non-relevant actions avoided, but also the actions that are aligned with the actual taken action are enhanced. It will be appreciated that this will then improve the likelihood of the correct action being indicated when the system components achieve those operating conditions again.

FIG. 6

**Description**

FIELD OF THE INVENTION

The present invention relates to a controller operable to generate control signals to control system components, a method of generating control signals to control system components and a computer program product.

BACKGROUND

There are long-term trends towards higher bandwidth and service customization in telecommunications networks. In wireless networks these trends have led to the utilisation of small cells to increase capacity deployment capabilities, resulting in a significant increase in the network complexity. In core networks, increased flexibility and re-configuration is required to accompany dynamic service environments. Additionally, a greater prevalence on minimizing network energy consumption conflicts with the need for network wide efficiency and requires increased re-configurability at both the wireless and the optical network level. These changes and requirements lead to significantly increased expenses for deployment and operation, which could lead to making future networks widely un-deployable. Achieving more autonomy of future networks will address these problems and will create new growth opportunities. As a result, the introduction of self-configuration features in wireless communications has recently become an active research area. Similar trends in system complexity can also be found in other areas.

Using fixed thresholds for partitioning the input space into discrete states can lead to sudden state transitions which may lead to abrupt actions which is undesirable in most learning systems. This is particularly true in multi-agent learning systems where a number of learning agents simultaneously interact with the environment. In such conditions, an abrupt reaction of an agent, due to a state transition, may cause significant changes in the environment which could subsequently trigger other agents to take abrupt actions which can lead to oscillations and system's instability.

Fuzzy controllers have recently found extensive applications in industry. This is particularly true for the case of complex systems and those that can not be easily defined and subsequently are not controllable with conventional methods. In such scenarios, fuzzy controllers can provide a solution since they can easily cope with inaccurate and approximate data and can also mimic the human knowledge and reasoning. However, the performance of fuzzy controllers typically relies on the availability of human expertise. Such expertise may not be available or optimal in all applications in advance. Therefore, an algorithm to provide an adaptive self-learning fuzzy system is highly desirable. The way such adaptation can be applied strongly depends on the environment and the type of application as well as the availability and the format of the trainer. While many of the parameters such as the inputs/output membership functions can be adapted, the adaptation of fuzzy rules, that are the heart of each fuzzy system, is of special significance.

By employing fuzzy sets and using the concept of fuzzy linguistic variables through fuzzy membership functions that are commonly overlapping, not only a very good level of input abstraction, but also smooth state transitions can be achieved.

A priori knowledge can be incorporated in the fuzzy rules by initialising a series of "if...then rules". In rule-based fuzzy systems, the control structure consists of a collection of such rules that defines the behaviour of the controller for a given condition. Therefore, changing a fuzzy system parameter is analogous to modifying specific rules that are independent from each other.

Reinforcement learning as a way of adapting fuzzy rules is a type of learning that involves an agent learning behaviour through interaction with its environment. The direct consequences of selected actions are given by a reinforcement signal, but the correct actions are not provided. It is a trial-and-error-based method, closely related to instrumental conditioning, in which the actions that improve performance, when they are triggered in the presence of certain input signals, become associated with these input signals. One of the major issues regarding reinforcement learning is convergence, particularly when the input space is continuous or the environment is highly dimensional. In the reinforcement learning paradigm, this problem is referred to as the curse of dimensionality.

Although such an approach can improve the operation of controllers and the systems under their control, undesirable consequences can occur when implementing such controllers.

Accordingly, it is desired to provide an improved controller.

SUMMARY

According to a first aspect, there is provided a controller operable to generate control signals to control system components, the controller comprising: fuzzy logic operable to receive information relating to operation of the system components and to generate a fuzzy state representation of the information; rules logic operable to apply the fuzzy state representation to a plurality of state-action pairs, each state-action pair having a ranking indicating an appropriateness of each action for that state, a triggered set of the plurality of state-action pairs triggering in response to the fuzzy state representation, each of the triggered set of the plurality of state-action pairs have an action output determined by its ranking and an associated strength; aggregation logic operable to determine an aggregated action output representative of the action outputs and associated strengths of the triggered set of state-action pairs, the aggregated action output being used to generate the control signals; and ranking update logic operable to update the ranking of state-action pairs which have a state corresponding with the states of the triggered set of state-action pairs and which have at least one action output equivalent to the aggregated action output.

The first aspect recognises that, while using a fuzzy logic approach enables a high level of states' abstraction for the reinforcement learning system, which is absolutely crucial for large systems with multi-element optimisation objectives or when the input state is continuous, it will also create a new dimension of complexity. That is when the input state is fuzzified through common overlapping membership functions it is quite possible to have a number of activated states at each given point in time. While the final crisp action is decided after the defuzzification state, there is a need for a mechanism to effectively distribute the reinforcement associated the observed action to the contributing state/action pairs. Also, when the system's dimensions and particularly the number of the input metrics increases the number of activated states at each time step would be consequently increased. In such circumstances, it would be likely that many of the actions associated to activated states have very low correlation with the final action after the defuzzification. In an extreme setting not only those actions might not be inline with the final selected actions but also could contradict it. This could mainly be due to the fact that the individual actions selected by the activated states can easily cancel out each other resulting in a final action that may not necessarily correspond to each and every individual action selected by states. While a credit assignment and reinforcement distribution mechanism may minimise the contribution of non-relevant action/state pairs, it does not avoid them. This problem becomes much more significant with an increase in the inputs dimension of the system where individual selected actions can be highly dispersed. Therefore, the first aspect recognises that there is a clear need for a solution to effectively evaluate the equivalent actions corresponding to the final action in a way that the equivalent actions impose the highest possible correlation to that final action. In the particular example of common dual overlapping fuzzy membership functions where a maximum of two fuzzy sets are activated at each given point, it is possible to uniquely represent the equivalent of any output crisp value (if it is in range) through only two membership functions (actions) within the fuzzy sets. In a highly dimensional optimisation setting, this could enormously improve the quality of the learning procedure as not only irrelevant actions are not credited but also the equivalent action sets are identified and are receive the full reinforcement. Hence, the first aspect provides a way to find equivalent fuzzy actions of a given fuzzy output after the defuzzification stage that can significantly improve the performance of the learning procedure when a fuzzy logic based reinforcement learning approach is employed. The resulting controller seeks to solve the curse of dimensionality encountered in traditional reinforcement learning systems and thereby makes it an applicable self-x solution that can cope with realistic environments with large input spaces.

The first aspect introduces a way to improve the learning and adoption strategy for rule-based fuzzy systems when no direct trainer is available, but the system under control is able to interact with its environment and to receive feedback from the environment as a consequence of its control actions. The learning process is a reinforcement learning system where an agent tries to take actions in an environment so as to maximize some notion of reward. In contrast to supervised learning, here the correct input/output pairs are never presented, nor sub-optimal actions are explicitly corrected. This approach seeks to improve the efficiency of the learning process by abstracting the action space within the fuzzy system. This is done by finding the equivalent action sets of the final deffuzified crisp output of the fuzzy system and through reverse fuzzy input-output mapping.

Accordingly, a controller is provided which may generate control signals to control components of a system. The controller may comprise fuzzy logic which may receive information or data detailing the operation or characteristics of system components and which may generate a fuzzy state representation of that information. It will be appreciated that typically the fuzzy state representation of this information will be defined by a series of membership functions for each of the input values. Rules logic may also be provided which receives the fuzzy state representation and determines, based on a set of state-action pairs for each of the rules, which of those state-action pairs are triggered by that fuzzy state representation. Typically, a state-action pair is considered to be triggered if the antecedent of the rule associated with that state-action pair is considered to be, to some degree, true. Should a particular state be determined to have been achieved, then each state-action pair for that state will have a ranking for each possible action for that state. For example, in the case where three actions are possible for each state, each of those actions will have an indication of how suitable each of those actions are deemed to be for that state. The most appropriate action output determined by its ranking is provided for each of the triggered state-action pairs, together with an associated strength for that state-action pair. Hence, for any fuzzy state representation provided to the rules logic, a set of state-action pairs is triggered, each of which have an action output considered to be the most appropriate for that state and an associated strength. Aggregation logic may then be provided which aggregates the action outputs provided by the state-action pairs and utilises their associated strengths to generate an aggregated action output which, in turn, is used to generate control signals. In this way, it can be seen that the triggered state-action pairs each provide a contribution to the eventual output used to generate the control signals to ensure that the most appropriate control signals are generated. Ranking update logic may also be provided which updates the appropriate state-action pairs. The state of each triggered state-action pair provides an indication of the state-action pairs to be updated. However, rather than simply updating the actual state-action pairs that contributed to the aggregated action output, only the state-action pairs which provide an action which is equivalent to the aggregated action output are updated. For example, if three state-action pairs are triggered, with a first state indicating an action of 'increase', a second state indicating an action of 'decrease' and a third state indicating an action of 'no change', which leads to an aggregated action output of 'no change', then the 'no change' state-action pair of the first, second and third state are each updated, whereas the ranking of the increase state-action pair for the first state and the decrease state-action pair of the third state will typically remain unchanged. In this way, it can be seen that only those state-action pairs aligned with the eventual aggregated outputs are updated. This significantly improves the efficiency of the learning process, as not only are the non-relevant actions avoided, but also the actions that are aligned with the actual taken action are enhanced. It will be appreciated that this will then improve the likelihood of the correct action being indicated when the system components achieve those operating conditions again.

In one embodiment, the ranking update logic is operable to update rankings of state-action pairs which have a state corresponding with the states of each of the triggered set of state-action pairs and which have at least one action output having a highest correlation with the aggregated action output. Accordingly, the state-action pairs triggered will have their rankings updated. The particular state-action pair of the group of state-action pairs for each state that was triggered which has its ranking updated may be the one which correlates most with the aggregated action output.

In one embodiment, the aggregated action output is represented by dual overlapping membership functions and the ranking update logic is operable to update rankings of state-action pairs having a state corresponding with the states of each of the triggered set of state-action pairs and which have a pair of action outputs encompassing the aggregated action output. Accordingly, when the aggregated action output is representable by membership functions having a maximum of two overlapping areas, the pair of action outputs within which the aggregate action output lies may be updated. For example, should the aggregated action output lie in a region covered by membership functions defining 'decrease' and 'no change', then the state-action pairs for 'decrease' and 'no change' for the triggered states will have their rankings updated. Hence, it can be seen that where dual overlapping membership functions are provided, a maximum of two state-action pairs of each triggered state will only ever need updating.

In one embodiment, the ranking update logic is operable to update rankings of state-action pairs having a state corresponding with the states of each of the triggered set of state-action pairs and which have a pair of action outputs encompassing the aggregated action output based on membership functions of that pair of action outputs whose centres are closest to the aggregated action output.

In one embodiment, the ranking update logic comprises a pre-generated transfer curve and a set of membership functions corresponding to membership functions used to derive the aggregated action output, the pre-generated transfer curve being operable to receive the aggregated action output and provide a derived output to the membership functions, the membership functions providing an indication of action outputs corresponding to the aggregated action output to be used when updating the rankings. Accordingly, a pre-generated transfer curve may be utilised to determine the actions which are equivalent to the aggregated action output. The aggregated output may be provided to the transfer curve which outputs a value which may then be provided to a membership function to determine the equivalent actions. By utilising the transfer curve, it is possible to determine the original output of the aggregation of rules prior to a de-fuzzification method being applied to generate the aggregated output. Since the transfer curve was generated using the same output membership functions and the fuzzification method as that used to generate the aggregated output, even if the de-fuzzification method is non-linear an accurate equivalent of the aggregated output can be determined.

In one embodiment, the ranking update logic is operable to update rankings of state-action pairs in proportion to a level of contribution of each of the pair of action outputs to the aggregated action output. Accordingly, the degree of truth of each state-action pair can be determined for each aggregated action output. This degree of contribution can be utilised to factor the update of the rankings of those state-action pairs. Hence, the rankings of those state-action pairs can be updated to reflect the contribution that they made to the aggregated output.

According to a second aspect, there is provided a method of generating control signals to control system components, comprising the steps of: receiving information relating to operation of the system components and to generate a fuzzy state representation of the information; applying the fuzzy state representation to a plurality of state-action pairs, each state-action pair having a ranking indicating an appropriateness of each action for that state, a triggered set of the plurality of state-action pairs triggering in response to the fuzzy state representation, each of the triggered set of the plurality of state-action pairs have an action output determined by its ranking and an associated strength; determining an aggregated action output representative of the action outputs and associated strengths of the triggered set of state-action pairs, the aggregated action output being used to generate the control signals; and updating the ranking of state-action pairs which have a state corresponding with the states of the triggered set of state-action pairs and which have at least one action output equivalent to the aggregated action output.

In one embodiment, the step of updating comprises updating rankings of state-action pairs which have a state corresponding with the states of each of the triggered set of state-action pairs and which have at least one action output having a highest correlation with the aggregated action output.

In one embodiment, the aggregated action output is represented by dual overlapping membership functions and the step of updating comprises updating rankings of state-action pairs having a state corresponding with the states of each of the triggered set of state-action pairs and which have a pair of action outputs encompassing the aggregated action output.

In one embodiment, the step of updating comprises updating rankings of state-action pairs having a state corresponding with the states of each of the triggered set of state-action pairs and which have a pair of action outputs encompassing the aggregated action output based on membership functions of that pair of action outputs whose centres are closest to the aggregated action output.

In one embodiment, the step of updating comprises utilising a pre-generated transfer curve and a set of membership functions corresponding to membership functions used to derive the aggregated action output by receiving the aggregated action output and providing a derived output to the membership functions, the membership functions providing an indication of action outputs corresponding to the aggregated action output to be used when updating the rankings.

In one embodiment, the step of updating comprises updating rankings of state-action pairs in proportion to a level of contribution of each of the pair of action outputs to the aggregated action output.

According to a third aspect, there is provided a computer program product operable when executed on a computer to perform the method steps of the second aspect.

Further particular and preferred aspects are set out in the accompanying independent and dependent claims. Features of the dependent claims may be combined with features of the independent claims as appropriate, and in combinations other than those explicitly set out in the claims.

BRIEF DESCRIPTION OF THE DRAWINGS

Embodiments of the present invention will now be described further, with reference to the accompanying drawings, in which:

Figure 1 is a block diagram of a fuzzy inference system;
Figure 2 is a schematic comparison between traditional and fuzzy-based reinforcement learning algorithms;
Figure 3 illustrates output membership functions;
Figure 4 shows activated output membership functions after a rules aggregation stage;
Figure 5 illustrates an equivalent action according to one embodiment;
Figure 6 illustrates an equivalent action estimation using virtual fuzzy layer according to one embodiment; and
Figures 7A and 7B respectively illustrate output-input transfer functions of the virtual fuzzy layer for a given output membership functions shown Figure 3 when the defuzzification method is Centroid and Smallest of Maximum.

DESCRIPTION OF THE EMBODIMENTS

In overview, embodiments provide a way to improve the learning and adoption strategy for rule-based fuzzy systems when no direct trainer is available but the system under control is able to interact with its environment and to receive feedback signals from the environment as a consequence of its control actions. The learning process is a reinforcement learning system where an agent tries to take actions in an environment so as to maximize some notion of reward. In contrast to supervised learning, the correct input/output pairs are never presented, nor sub-optimal actions are explicitly corrected. This approach improves the efficiency of the learning process by abstracting the action space within a fuzzy system. This is done by finding the equivalent action sets of the final, deffuzified crisp output of the fuzzy system and through reverse fuzzy input-output mapping.

The basic concepts of fuzzy logic systems and reinforcement learning approaches will now be described in more detail.

RULE-BASED FUZZY SYSTEMS

Fuzzy Inference Systems (FIS) are computing frameworks based on the concepts of fuzzy set theory, which have been extensively applied in many fields like control, decision support, system identification, etc. The success in deployment of fuzzy solutions is mainly due to their closeness to human perception and reasoning, as well as their intuitive handling and simplicity, which are important factors for acceptance and usability of the systems.

Fuzzification

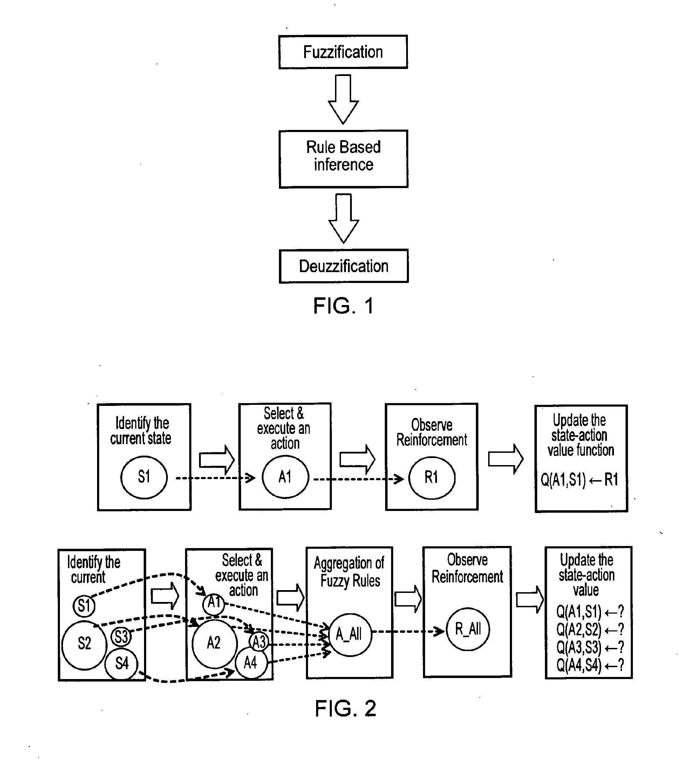

Fuzzy sets are sets whose elements have degrees of membership. In a classical set theory, the membership of elements in a set is assessed in binary terms (an element either belongs or does not belong to the set). In contrast, a fuzzy set theory permits the graded assessment of the membership of elements in a set. This is described with the aid of a membership function valued in the real unit interval [0, 1]. Figure 1 is a block diagram showing the three main components of a FIS.

A membership function represents the degree of truth (which denotes the extent to which a proposition is true) of a statement. Membership functions allow partial membership in a set. The process of mapping the input values into membership functions is usually referred to as "fuzzification".

Rule-Based Inference

Membership functions may be combined in fuzzy "if ... then" rules to make inferences, such as "if x is high and y is low, then z is normal" in which "high," "low," and "normal" are membership functions of the matching fuzzy subsets. Fuzzy rule sets usually have several antecedents that are combined using fuzzy operators, such as AND, OR, and NOT. The Mamdani-type inference expects the output membership functions to be fuzzy sets.

Defuzzification

For defuzzification, there are several methods. In the "Centroid" method, the "centre of mass" of the result provides the output crisp (defuzzified) value. In this method, the crisp output value is calculated such that half of the area under the resulting output fuzzy set is on each side of the output value.

As will be explained in more detail below, embodiments seek to generate an efficient rules base which is adaptive and can be structured in an online fashion when no direct training is provided and instead only a reinforcement feedback is available from the environment.

REINFORCEMENT LEARNING

Reinforcement learning is a sub-area of machine learning concerned with how an agent should take actions in an environment so as to maximize its long-term reward. In this respect, the learner is not told which actions to take, as in most forms of machine learning, but instead must discover which actions yield the most reward by trying them. Reinforcement learning algorithms attempt to find a policy that maps states of the world to the actions the agent ought to take in those states. Reinforcement learning is different from supervised learning which learns from examples provided by a knowledgeable external supervisor. In interactive problems it is often impractical to obtain examples of desired behaviour that are both correct and representative of all the situations in which the agent has to act. In unknown environments, where learning would be expected to be most beneficial, an agent must be able to learn from its own experience. Beyond the agent and the environment, there are typically three main sub-elements to a reinforcement learning system: a policy, a reward function and a value function.

A policy, $\Pi$, is a mapping from states, s, and actions, a, to the probability of taking action a when in state s. The value of a state s under a policy, denoted $V^\pi(s)$, is the expected return when starting in s and following the policy $\Pi$ thereafter. Similarly, the value can be defined of taking action a in state s under a policy $\Pi$, denoted $Q^\pi(a,s)$, as the expected return starting from *s,* taking the action a, and thereafter following policy.

The expected return is in the simplest case just the sum of the rewards. This approach is appropriate in applications in which there is a natural notion of final time step, that is, when the agent-environment interaction breaks naturally into sub-sequences, which are called episodes. This representation can become problematic in the case of continual tasks where the agent-environment interaction does not break naturally into identifiable episodes. For such case an additional discount rate can be used. Under this concept, the overall return can be defined as:

$$Re_t = r_{t+1} + \gamma . r_{t+2} + \gamma^2 . r_{t+3} + ... = \sum_{k=0}^{\infty} \gamma^k . r_{t+k+1}$$

where $Re_t$ is the return value after time step t and $r_{1+n}$ represents the immediate reward after time step t and $\gamma$ is a discounting factor, $\gamma < 1$. The discount rate is a relative value of delayed versus immediate rewards and determines the present value of future rewards (i.e. a reward received k time steps in the future is worth only $\gamma^k$ times what it would be worth if it were received immediately). If $\gamma=0$, the agent is "myopic" in being only concerned with maximizing immediate rewards.

There are three fundamental methods for solving the reinforcement learning problems namely: dynamic programming, Monte Carlo methods and Temporal Difference (TD) learning. Amongst all these methods, TD learning is preferable and is a combination of the other two methods. Dynamic programming methods are very well developed mathematically, but require a complete and accurate model of the environment which unfortunately dose not exist in many application scenarios. Monte Carlo methods do not require a model and are very simple conceptually, but are not suited for step-by-step incremental computation. However, TD learning methods require no model and are naturally implemented in an online, fully incremental fashion. Whilst with Monte Carlo methods one must wait until the end of an episode, because only then is the return known, with TD learning methods one need only wait one time step. TD methods learn their estimates in part on the basis of other estimates.

Q-learning is a TD learning technique that works by learning an action-value function:

$$Q\left(s_t,a_t\right)\leftarrow Q\left(s_t,a_t\right)+\alpha\left(s_t,a_t\right)\left[Re_t - Q\left(s_t,a_t\right)\right]$$

or

$$Q(s_t,a_t)\leftarrow Q(s_t,a_t)+\alpha\left(s_t,a_t\right)\left[r_{t+1}+\gamma.\underset{a}{Max}\,Q\left(s_{t+1},a\right)-Q\left(s_t,a_t\right)\right]$$

where $\alpha(s_1,a_1), 0<\alpha<1$ is the learning rate corresponding to action a in state s but could be the same value for all pairs. In this case, the learned action-value function, Q, directly approximates, the optimal action-value function, independent of the policy being followed. This dramatically simplifies the analysis of the algorithm and enables early convergence proofs. In a procedural form, the Q-learning algorithm can be presented as the follows:

*Initialize Q(s,a) arbitrarily*
*Repeat (for each episode):*

    *Initialise s*

*Repeat (for each step of episode):*

    *Choose a from s using policy derived from Q*
    *Take action a, observe r, s'*

$$Q(s,a)\leftarrow Q(s,a)+\alpha\left(s,a\right)\left[r+\gamma.\underset{a'}{Max}\,Q(s',a')-Q(s,a)\right]$$

$$s\leftarrow s'$$

    *Until s is terminal*

## REINFORCEMENT LEARNING ASSISTED SELF-ORGANIZING FUZZY CONTROLLERS

As mentioned above, reinforcement learning is a form of learning in which an agent interacts with its environment. This interaction takes the form of the agent sensing the environment, typically through the receipt of data or information relating to that environment, and based on this sensory input choosing an action to perform in the environment, such as the generation of one or more control signals. The action changes the environment in some manner and this change is communicated to the agent through a scalar reinforcement signal. The environment is typically formulated as a finite-state Markov decision process (MDP). Therefore, when using reinforcement learning, the environment needs to be seen as discrete states.

Fuzzy logic classifies the input variables into various lingual categories by means of membership functions. Additionally, in contrast to non-fuzzy grid-based states definitions, since fuzzy membership functions are commonly overlapping, the transition from one state to another can be implemented in a smooth manner without significant abrupt changes in a fuzzy controllers' behaviour.

Common reinforcement learning approaches assume that the environment is stationary, meaning that given the same input state, the agent would always receive the same reinforcement for the same taken action. Unfortunately, this may not hold true for many cases, including multi-agent scenarios when a number of learning agents make changes to the environment simultaneously or when each agent has a partial observation of the environment. Therefore, there is a need to an algorithm that is self-organizing, but also adaptive to the changing environment as well.

In embodiments, given a number of inputs, the state matrix is structured by combining all input variables in an intersectional fashion using an AND operator. For example assuming a simple system with two input parameters (e.g. x1 and x2), each using three membership functions (e.g. 'low', 'medium' and 'high'), the input space could be classified into 9 states. Assuming a single output (e.g. y), again with three membership function (e.g. 'decrease', 'no change' and 'increase'), the major task is to find the appropriate consequence for each given 'if...then' rule which corresponds to an input state (e.g. if x1 is 'low' AND x2 is 'normal' then y is 'increase'). However, it is important to notice that due to the fuzzy nature of the inputs and the overlapping membership functions, more that one 'if...then' rules might be fired at each time. In other words, each input can belong to more than one membership function with different degrees of membership. In the above example, input x1 could belong to the 'low' membership function with degree of 0.2, and to the 'normal' membership function with degree of 0.8, resulting in firing more than one rule. This is not the case in conventional reinforcement learning scenarios with non-overlapping states.

The firing strength of each rule is then calculated based on the degrees of truth of the participating inputs in the antecedent part of the 'if...then' rules. The intersection of the fuzzy sets can be constructed by applying an appropriate type of t-norm operation. A T-norm is a kind of binary operation used in the framework of multi-valued logic, specifically in fuzzy logic. A t-norm is a function $T: [0, 1] \times [0, 1] \rightarrow [0, 1]$ which is commutative, monotonic and associative in that the number 1 acts as an identity element. T-norms are a generalization of the usual two-valued logical conjunction in classical logic that are developed for fuzzy logics. Indeed, the classical Boolean conjunction is both commutative and associative. The monotonicity property ensures that the truth value of conjunction does not decrease if the truth values of conjuncts increase. The requirement that 1 be an identity element corresponds to the interpretation of 1 as true (and consequently 0 as false). Two well-known t-norms are "Minimum t-norm", also known as the Godel t-norm, which, as its name implies, return the minimum truth values of conjuncts and the "Product t-norm" that returns the ordinary product of conjuncts' truth value.

Mamdani-type inference, expects the output membership functions to be fuzzy sets. After the aggregation process, there is a fuzzy set for each output variable that needs defuzzification. It is possible, and in many cases much more efficient, to use single spikes as the output membership functions rather than distributed fuzzy sets. This type of output is sometimes known as a singleton output membership function, and it can be thought of as a pre-defuzzified fuzzy set. This enhances the efficiency of the defuzzification process because it greatly simplifies the computation required by the more general Mamdani method

As mentioned above, one major challenge is to design an efficient fuzzy rules structure that can effectively map the input states to the suitable output (action) space. In other words, a mechanism to select an appropriate consequence for each given 'if...then rules is needed.

GREEDY ACTION SELECTION MECHANISM

In embodiments, all available output membership functions (referred to as the actions in reinforcement learning terminology) can be potentially selected for every given rule. The best action for each state is chosen competitively amongst all possible candidates. Each action ($a \in A$) available to each state ($s \in S$) would be associated with a ranking $R(s,a)$ and, unless the system is exploring, the action with the highest associated ranking would be chosen for each given state (each state is identified by a unique 'if...then' rule antecedent combination):

$$If\ exploiting:\ A_{selected,s} = a \leftrightarrow \underset{a'}{Max}\big(R(s,a')\big) = R(s,a)$$

Subsequently, based on the observed resulting reinforcement signal, the ranking of the involved fired rules are updated after each action. It will be appreciated, therefore, that the rule rankings associated to each action-state pair is exactly analogous to the concept of action-state value-function in Q-learning.

REINFORCEMENT DISTRIBUTION AND THE EQUIVALENT ACTION

Once an action is performed, then the ranking of the selected actions of the fired rules needs to be updated. However, it is very important to notice that since all the fired rules might not have the same level of contribution in producing the final deffuzified output, the return reinforcement ought to be then distributed between the participating rules accordingly.

There are two major challenges when using reinforcement learning in the context of a fuzzy rule based system. The first problem is that at any given time step, the number of activated states could be more than one, where each state is assigned a firing strength value. The second, which is a consequent of the first, concerns the number of individual actions. In fact the final output of the fuzzy system is determined by aggregating the output of individual rules.

As described above, in the reinforcement learning paradigm, the aim is to build an optimal map between the states and the action space. This happens through the learning procedure based on the effective observed return reinforcement signal when taking a particular action at any given state. In fuzzy systems the case is more complex as not only is more than one state is selected at each step, but also the final observed reinforcement is a result of mixture of a number of individual actions, making it difficult to relate the overall observed reinforcement signal to each state-action pair as illustrated in Figure 2.

The firing strength of each rule is the degree to which the antecedent part of a fuzzy rule is satisfied. Since in embodiments each state is defined through one and only one rule, the firing strength of each rule can be interpreted as a degree of truth of its associated state. Consequently, the state strength of each state as the normalised firing strength of that state can be defined as:

$$\forall s \in S \qquad Ss(s) \equiv \frac{f_s}{\sum_{s'} f_{s'}}$$

where $f_s$ represents the firing strength of the state s.

Additionally, a similar measure can be defined for the action space to determine the contribution of individual taken actions on the final collective action after the defuzzification stage. The involvement of each individual action in deciding the final collective output would be in proportion to the sum of the firing strength of all states nominating that particular action. Therefore, the action strength can be defined as:

$$\forall a \in A \qquad As(a) \equiv \frac{\sum_{s} f_s . Selected(s,a)}{\sum_{s'} f_{s'}}$$

where *Selected*(*s,a*) is a binary parameter indicating whether or not action a is the selected action in state s:

$$Selected(s,a) = \begin{cases} 1 & \text{if } a \text{ is selected for state } s \\ 0 & \text{Otherwise} \end{cases}$$

In case all activated states advise completely different actions with no two states with the same suggested action, the action strength parameter for all nominated actions would be equal to the corresponding state strength of their nominating states. In general:

$$\forall s \in S \quad \forall a \in A \quad A_{selected,s} = a \implies As(a) \geq Ss(s)$$

In a Q-learning setting, the rankings are associated to each state-action pair and therefore, when updating the Q parameters it makes sense to consider both the state's and the action strength of the pair being updated.

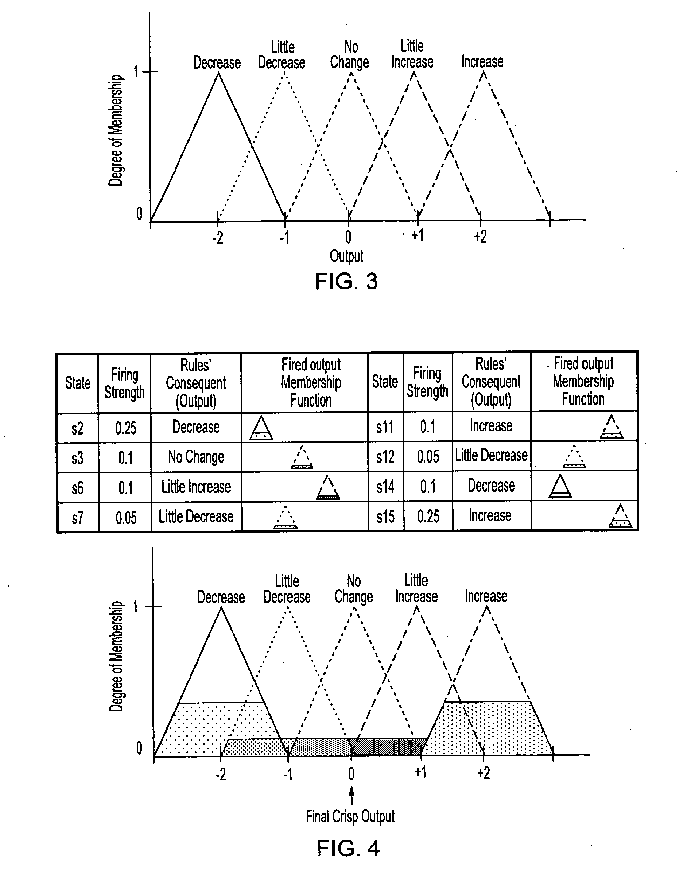

However, a difficulty arises when individual nominated actions are not in line with the final, crisp output. This is very likely to occur when the input metrics are highly dimensional, resulting in a large number of simultaneous activated states where the distribution of the nominated actions could be highly dispersed. For example, consider a system with 3 input metrics, each being fuzzified through dual overlapping membership functions. Since two membership functions can be activated per input, the total number of activated states ("if....then" rules each consists of two input metrics in its antecedent that are constructed through combination of all possible input pairs intersectionally) can be up to 8 (the total number the states depends on the number of inputs and the number of membership functions used for each input). Now for the sake of simplicity, imagine that the output space (action space) consists of 5 membership functions. In this example the action is considered to be the change that should be applied to a particular system's parameter. The output membership functions could be: Decrease, Little Decrease, No Change, Little Increase and Increase, as shown in Figure 3 which illustrates the membership functions and their associated range.

Assume that there are currently 8 activated rules (states) with the given normalised firing strength vector of F= [0.25 0.1 0.1 0.05 0.1 0.05 0.1 0.25]. Moreover, assume that the activated states are state s2, s3, s6, s7, s 1 1, s12, s 14, s 15. That is the first activated sate is s2, the second one s3, the third s6 and so on. According to this vector, the normalised firing strength of the first activated rule is 0.25, the second one is 0.1, and so on.

The fuzzy "if...then" rules will then define the consequentially activated rules (or the action related to each selected state from the reinforcement learning perspective). The Table shown in Figure 4 summarises the consequent of each of the fired rule. Once this step (the rule's inference) is done, the individual consequents are aggregated and then final output is calculated using a defuzzification method, as shown in Figure 4, which illustrates the results of rules aggregation.

There are a number of defuzzification schemes such as the Centre of Gravity (CoG), Basic Defuzzification Distributions (BADD), Mean of Maximum (MOM), Fuzzy Mean (FM), First of Maximum (FOM) and many more. The CoG method, for example, calculates the centre of the mass of the aggregated fuzzy membership functions that are activated and determines the final output to be exactly at '0', where the centre of the activated membership functions (shown in Figure 4) is located. This is due to the symmetric shape of the activated membership function around the point '0'.

The learning agent will then execute this final output. In this example, the decision is to make no change to the parameter under control. The agent would then receive reinforcement for the action that has performed. This reinforcement can be merely an immediate reward from the environment (myopic systems) or in a broader sense can additionally include the future states as well. Once the learning agent observes the reinforcement signal, then it will update the associated learning parameter (more specifically the Q-values of the state-action pairs), as shown in Figure 2.

In fuzzy based reinforcement learning systems (illustrated in the lower part of the Figure 2), a credit assignment and reinforcement distribution algorithm is needed. The common element of these algorithms is the fact that they rely on the contribution of individual selected actions (output membership function in fuzzy terminology) in definition of the final, crisp output when the reinforcement is distributed amongst the activated rules. Higher weights are given to more contributing state-action pairs when Q-values are updated. However, the exact procedure through which the Q-values are updated can vary from one scheme to another. For example, an Evolutionary Learning of Fuzzy rules (ELF) framework suggests that the Q-values be weighted averaged over all observations and to use the states' firing strength as the parameter to define the weights. A more effective updating scheme could not only account for the states' but also for the actions' strength. After all, the Q- values are associated to the both states and action pairs. After the action is performed (that is to leave the parameter under control unchanged in this example), a reinforcement signal, R, is received by the learning agent from the environment. The Q-parameters are then updated in dependence on this reinforcement signal. In this update procedure, the state's and action's strength plays the major role. That is:

$$Q(s,a) \leftarrow \left(R, W_{s,a}\right) \quad Where \quad W_{s,a} \leftarrow \left(Ss(s), As(a)\right)$$

In this example, the following state-action pairs are to be updated based on the observed reinforcement signal (R) and the following state and action strength values:

| State (s) | Action (a) | State Strength (Ss) | Action (As) |
|---|---|---|---|
| s2 | Decrease | 0.25 | 0.35 |
| s3 | No Change | 0.1 | 0.1 |
| s6 | Little Increase | 0.1 | 0.1 |

(continued)

| State (s) | Action (a) | State Strength (Ss) | Action (As) |
|---|---|---|---|
| s7 | Little Decrease | 0.05 | 0.1 |
| s11 | Increase | 0.1 | 0.35 |
| s12 | Little Decrease | 0.05 | 0.1 |
| s14 | Decrease | 0.1 | 0.35 |
| s15 | Increase | 0.25 | 0.35 |

As the table suggests, the highest update contribution belongs to the (s2, 'Decrease') and the (s15, 'Increase') pairs as they pose the highest states and actions strength. This is regardless of the specifics of the update procedure as explained before. However, although the 'Decrease' and the 'Increase' actions have the highest contribution when the final action was decided, unfortunately, the final output (zero) is not in line with any of these two actions as they have cancelled out each other's impact. It is very clear from this example that it would not be appropriate to give the credit or blame of not changing the value of the parameter under the control (that is the actual final, crisp output of the fuzzy system after the defuzzification, output=0) to the 'Decrease' or the 'Increase' actions. In fact any update of the s2, 'Decrease' state-action pair or the s15, 'Increase' state-action pair would be fundamentally wrong at this stage as the final output of the fuzzy system is not correlated with any of these two actions. Therefore, the practice of judging the closeness of the final action to that of the individual actions merely based on the strength of the individual actions is to be revised, as will now be described in more detail below.

EQUIVALENT ACTION APPROACH

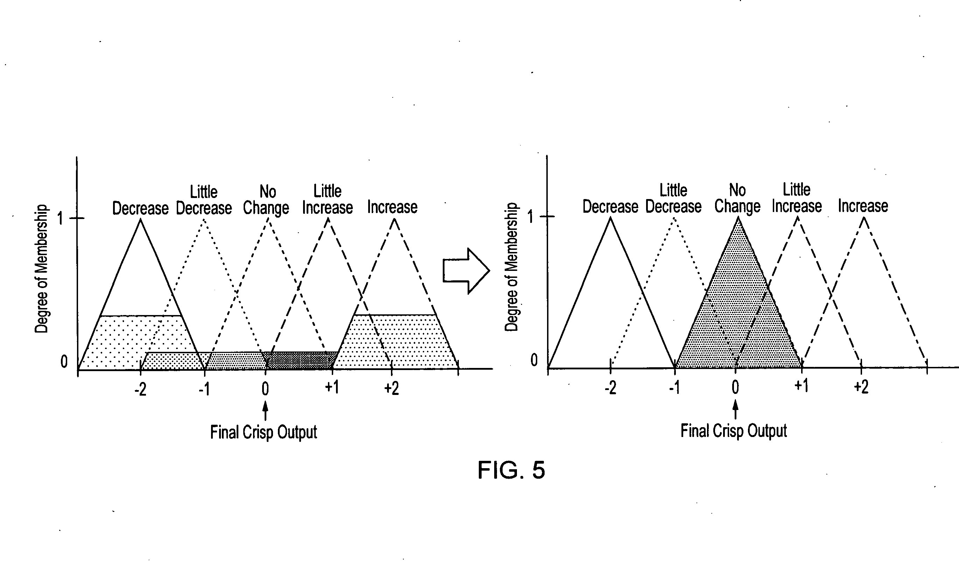

Embodiments utilise a concept of an equivalent action to represent the equivalent of the final, crisp output values in the fuzzy domain where the equivalent action(s) have the highest correlation with the final crisp value. With common dual-overlapping fuzzy membership functions, any output crisp value can be represented through a maximum of only two existing adjacent output membership functions. For the case of the example shown in Figure 5, the equivalent action here is simply 'No Change' with strength of 1. Of course this is a special case where only one membership function can sufficiently represent the equivalent action. If the final crisp output was instead 0.5, for example, then the equivalent action would be 'No Change' and 'Little Increase', both with a strength of less than 1.
Returning to the example shown in Figure 5, it would be much more appropriate to update the (s2,'No Change') state-action pair instead of the (s2, 'Decrease').
The equivalent action assumes that if all states (regardless of their firing strength) would have nominated that action (or action combination if more than one), the same crisp output value would have been resulted. Therefore, if the equivalent action is represented through a single output membership function, the action strength of the equivalent action would be equal to 1. In this example, that is akin to having all the 8 activated states to nominate the 'No Change' action. Therefore, with this consideration, the credit assignment and reinforcement distribution can be performed similar to that mentioned above, but now the table shown below can replace the table shown above to the update pairs and the associated parameters.

| State (s) | Action (a) | State Strength (Ss) | Action Strength (As) |
|---|---|---|---|
| s2 | No Change | 0.25 | 1 |
| s3 | No Change | 0.1 | 1 |
| s6 | No Change | 0.1 | 1 |
| s7 | No Change | 0.05 | 1 |
| s11 | No Change | 0.1 | 1 |
| s12 | No Change | 0.05 | 1 |
| s14 | No Change | 0.1 | 1 |
| s15 | No Change | 0.25 | 1 |

However, a mechanism is required to find the equivalent action for a given crisp output value.

ESTIMATION OF THE EQUIVALENT ACTION

In the above example, due to the special symmetrical arrangement of the fired output membership functions, the equivalent model could be represented through a single output membership function. However, in a more general case, with double overlapping membership functions, two membership functions are necessary (and enough) to represent the equivalent action. In a dual overlapping membership function arrangement, identification of these membership functions through examination of the final crisp output is very straightforward. The membership functions involved are simply those whose centres are in the closest approximate to the final crisp output. For example, if the crisp output value was 0.25, the two membership functions that can represent the equivalent of this crisp output are the 'No Change' and 'Little Increase' functions. However, the level of the contribution of each of these two membership functions needs to be identified as they might not have equal weights. The identification of the firing strength of each these two membership functions needs to be determined when the equivalent action is evaluated. In other words, the equivalent action simply refers to two (or one in special cases) adjacent membership functions with specific firing strength that, if deffuzified, would generate the same crisp out value.

Since identification of the involved membership functions can be very straightforward, the main task would involves calculating the associated firing strength (degree of truth) of each of the membership functions. Unfortunately, the defuzzifcation process is normally a non-linear method, implying that it may not be straightforward to calculate the equivalent membership functions' firing strength. Even if this were possible via complicated analytical models, the solution would still be specific to that particular defuzzification method and also would not be valid when system parameters, such as the range of the output values are changed.

One way to approximate the equivalent membership functions would be to assume that the defuzzification process that has been employed was the "centre of the singletones (COS)" type. This is a special case of deffuzification which is also sometimes known as the Fuzzy Mean (FM) (although there is a slight difference in that concentration would be only on the centre of the membership functions rather than their shape or area). In that way the final output crisp value would be the weighted average between the centres of all trigged output membership functions, where the weightings are the degree of truth of membership functions.

In this example, because of the symmetrical arrangement of the trigged output membership functions, using a COS defuzzification would also result in 0 to be the final crisp output:

$$\left[ \frac{(0.35 \times -2) + (0.1 \times -1) + (0.1 \times 0) + (0.1 \times 1) + (0.35 \times 2)}{0.35 + 0.1 + 0.1 + .01 + 0.35} \right] = 0$$

).

With this assumption, given any output crisp value ($O_c$), the equivalent output membership functions and their firing strength can be calculated. That is:

$$S_1 \times C_1 + S_2 \times C_2 = O_c$$

$$S_1 + S_2 = 1$$

where $C_1$ and $C_2$ are the centres of the two adjacent membership functions located at the closest approximate of the $O_c$ and $S_1$ and $S_2$ are the firing strength of the corresponding membership functions.

In the above example, if the crisp output is 1.2 for example, the associated output membership functions of the effective action are 'Little Increase' and 'Increase' respectively (i.e. $C_1$ and $C_2$ are 1 and 2 correspondingly). Then:

$$S_1 \times 1 + S_2 \times 2 = 1.2 \left.\begin{matrix} \\ \\ \end{matrix}\right\} \Rightarrow S_1 = 0.8 \ , \ S_2 = 0.2$$
$$S_1 + S_2 = 1$$

This means that the equivalent action is the combination of the 'Little Increase' and 'Increase' output membership functions activated with the degree of truth (firing strength) of 0.8 and 0.2 respectively. Therefore, for each activated state, two state-action pairs are to be updated, as shown in the following table:

| State (s) | Action (a) | State Strength (Ss) | Action Strength (As) | State (s) | Action (a) | State Strength (Ss) | Action Strength (As) |
|---|---|---|---|---|---|---|---|
| s2 | Little Increase | 0.25 | 0.8 | s2 | Increase | 0.25 | 0.2 |
| s3 | Little Increase | 0.1 | 0.8 | s3 | Increase | 0.1 | 0.2 |
| s6 | Little Increase | 0.1 | 0.8 | s6 | Increase | 0.1 | 0.2 |
| s7 | Little Increase | 0.05 | 0.8 | s7 | Increase | 0.05 | 0.2 |
| s11 | Little Increase | 0.1 | 0.8 | s11 | Increase | 0.1 | 0.2 |
| s12 | Little Increase | 0.05 | 0.8 | s12 | Increase | 0.05 | 0.2 |
| s14 | Little Increase | 0.1 | 0.8 | s14 | Increase | 0.1 | 0.2 |
| s15 | Little Increase | 0.25 | 0.8 | s15 | Increase | 0.25 | 0.2 |

In this way, the updated state-action pairs are much more relevant to the final crisp output. This significantly improves the efficiency of the learning process as not only is updating the non-relevant actions avoided, but also the algorithm actively involves the actions that are aligned with the actual taken action (i.e. the crisp output).

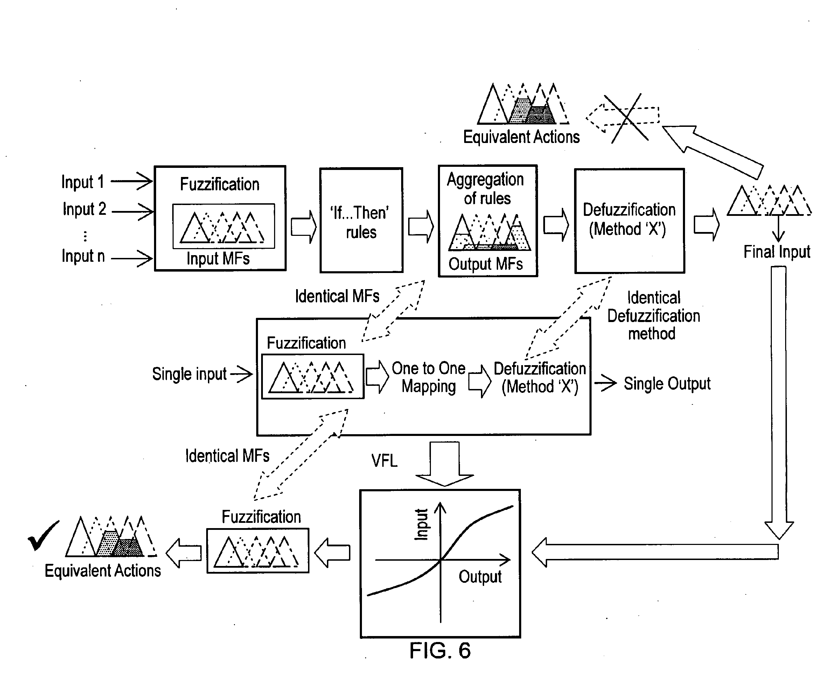

However, since defuzzification is often a non-linear process in general, it might not be a straightforward task to easily obtain the estimated effective action when different defuzzification methods are used. This is a very important property for most of the applications where real-time operation is required. So when there are very severe computing constraints, the accuracy of the learning update process can be traded-off against speed and simplicity of the solution by considering the defuzzification to be of the COS type (regardless of the actual defuzzification method used). Even with this assumption, the performance of the learning process is significantly improved compared to prior approaches. However, due to the difference between various defuzzification techniques, the effective action may be slightly different from the actual taken action. To get a more accurate equivalent of the taken action under any defuzzification method, a 'Virtual Fuzzy Layer' (VFL) is utilised. The VFL is a simple single-input single-output (SISO) intermediate fuzzy layer that can be used to assist the reverse defuzzification process to determine the equivalent effective actions as shown in Figure 6 and described in more detail below.

As Figure 6 illustrates, unless the defuzzification method is of a special type (such as the COS), it is in general not possible or computationally efficient to derive the equivalent actions for a given crisp output value. Therefore a simple virtual fuzzy layer is used to model the effect of the defuzzification. The VFL consists of a single input with the range similar to the main fuzzy controller output (i.e. final crisp output). This input is then fuzzified through a number of membership functions that are completely identical to the output membership functions of the main fuzzy controller. Similarly, the output membership functions of the VFL are the same as its input membership functions. Therefore, the 'if... then' rule step of the VFL stage is simply the one to one mapping of the membership functions from input to the output. Since a single input can fire a maximum of only two membership functions and there is an identical mapping of the input to the output membership functions, there are always a maximum of two activated actions before the defuzzification. Most importantly, the VFL should employ the very same defuzzification method as of the main fuzzy controller (shown as method 'X', where 'X' could be any possible defuzzification method).

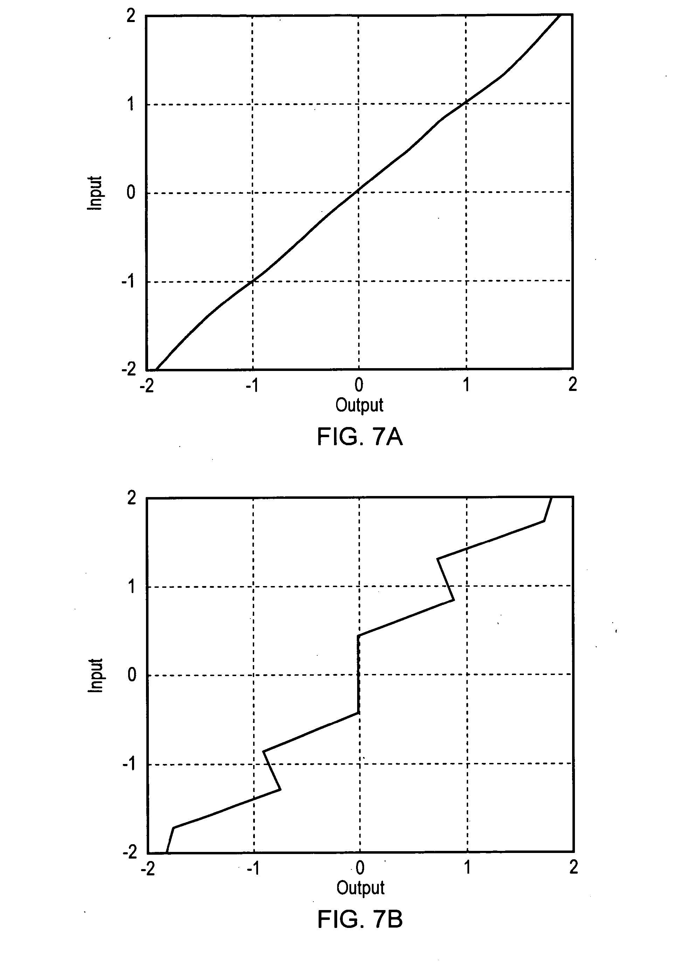

Once the VFL is constructed, then the output-input transfer function curve of the VFL can be derived. This can be done simply as an offline calculation. With this output-input characteristics curve, the calculation of the equivalent action is straightforward. The final fuzzy controller output can be looked up against the curve to find the corresponding input value. If this value is fuzzified using the same membership functions, then the equivalent actions can be yielded. In addition, it is possible to implement the input-output curve as a lookup table, which makes it suitable for real time applications, as shown in Figures 7A and 7B which show the output-input transfer function of the VFL for a given output membership functions shown Figure 3 when the defuzzification method is Centroid (Figure 7A) and Smallest of Maximum (Figure 7B).

As can be seen, the input might not have a unique value for a given output value with some defuzzification methods. In that case any corresponding input value can be chosen by the algorithm. Additionally, there special cases where the output membership functions are spike shapes (e.g. COS defuzzification) and it would not be possible to fuzzify a discrete value through such membership functions. In that case, the input membership functions of the VFL can be considered to have continuous triangular shape where each singletone (spike) represents the centre of a membership function where the degree of the truth equals to unity for that membership function and that the membership function linearly decreases until it reaches to the zero at the centres of the adjacent membership functions. The output membership function of the VFL can still remain the same (singletones).

The major advantage of employing a VFL layer is to accurately capture the effective action. Although this provides a very straightforward method where the 'one time computation' can be done offline, there are particular applications that are not capable of handling this solution (e.g. no memory is available for the VFL output-input curve), the agent can still benefit from the main proposed concept by approximating the equivalent actions. This can be done by assuming a linear COS defuzzification for example, or by using other approximation methods.

Accordingly, embodiments provide a way to implement a fuzzy-reinforcement learning systems which make it possible to apply autonomous and self-optimisation and self-configuration methods to a wide range of applications that are highly dimensional. Such an approach does not suffer from the problem referred to as the 'curse of dimensionality' and therefore is able to cope with highly dimensional environments which are very common in practical communication systems. This approach is quick to converge and is suitable for real time operations. Through the use of an equivalent action, an effective deployment of fuzzy logic and reinforcement learning techniques can be applied to very large variety of applications. Additionally, this approach is very straightforward to implement, which makes its adoption easier and broaden its application.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A controller operable to generate control signals to control system components, said controller comprising:

   fuzzy logic operable to receive information relating to operation of said system components and to generate a fuzzy state representation of said information;
   rules logic operable to apply said fuzzy state representation to a plurality of state-action pairs, each state-action pair having a ranking indicating an appropriateness of each action for that state, a triggered set of said plurality of state-action pairs triggering in response to said fuzzy state representation, each of said triggered set of said plurality of state-action pairs have an action output determined by its ranking and an associated strength;
   aggregation logic operable to determine an aggregated action output representative of said action outputs and associated strengths of said triggered set of state-action pairs, said aggregated action output being used to generate said control signals; and
   ranking update logic operable to update said ranking of state-action pairs which have a state corresponding with the states of said triggered set of state-action pairs and which have at least one action output equivalent to said aggregated action output.

2. The controller of claim 1, wherein said ranking update logic is operable to update rankings of state-action pairs which have a state corresponding with the states of each of said triggered set of state-action pairs and which have at least one action output having a highest correlation with said aggregated action output.

3. The controller of claim 1 or 2, wherein said aggregated action output is represented by dual overlapping membership functions and said ranking update logic is operable to update rankings of state-action pairs having a state corresponding with the states of each of said triggered set of state-action pairs and which have a pair of action outputs encompassing said aggregated action output.

4. The controller of claim 3, wherein said ranking update logic is operable to update rankings of state-action pairs having a state corresponding with the states of each of said triggered set of state-action pairs and which have a pair of action outputs encompassing said aggregated action output based on membership functions of that pair of action outputs whose centres are closest to the aggregated action output.

5. The controller of any preceding claim, wherein said ranking update logic comprises a pre-generated transfer curve and a.set of membership functions corresponding to membership functions used to derive said aggregated action output, said pre-generated transfer curve being operable to receive said aggregated action output and provide a derived output to said membership functions, said membership functions providing an indication of action outputs corresponding to said aggregated action output to be used when updating said rankings.

6. The controller of any preceding claim, wherein said ranking update logic is operable to update rankings of state-action pairs in proportion to a level of contribution of each of said pair of action outputs to said aggregated action output.

7. A method of generating control signals to control system components, comprising the steps of:

   receiving information relating to operation of said system components and to generate a fuzzy state representation of said information;
   applying said fuzzy state representation to a plurality of state-action pairs, each state-action pair having a ranking indicating an appropriateness of each action for that state, a triggered set of said plurality of state-action pairs triggering in response to said fuzzy state representation, each of said triggered set of said plurality of state-action pairs have an action output determined by its ranking and an associated strength;
   determining an aggregated action output representative of said action outputs and associated strengths of said triggered set of state-action pairs, said aggregated action output being used to generate said control signals; and
   updating said ranking of state-action pairs which have a state corresponding with the states of said triggered set of state-action pairs and which have at least one action output equivalent to said aggregated action output.

8. The method of claim 7, wherein said step of updating comprises updating rankings of state-action pairs which have a state corresponding with the states of each of said triggered set of state-action pairs and which have at least one action output having a highest correlation with said aggregated action output.

9. The method of claim 7 or 8, wherein said aggregated action output is represented by dual overlapping membership functions and said step of updating comprises updating rankings of state-action pairs having a state corresponding with the states of each of said triggered set of state-action pairs and which have a pair of action outputs encompassing said aggregated action output.

10. The method of claim 9, wherein said step of updating comprises updating rankings of state-action pairs having a state corresponding with the states of each of said triggered set of state-action pairs and which have a pair of action outputs encompassing said aggregated action output based on membership functions of that pair of action outputs whose centres are closest to the aggregated action output.

11. The method of any one of claims 7 to 10, wherein said step of updating comprises utilising a pre-generated transfer curve and a set of membership functions corresponding to membership functions used to derive said aggregated action output by receiving said aggregated action output and providing a derived output to said membership functions, said membership functions providing an indication of action outputs corresponding to said aggregated action output to be used when updating said rankings.

12. The method of claim any one of claims 7 to 11, wherein said step of updating comprises updating rankings of state-action pairs in proportion to a level of contribution of each of said pair of action outputs to said aggregated action output.

13. A computer program product operable, when executed on a computer, to perform the method steps of any one of claims 7 to 12.

```
┌─────────────────┐
│  Fuzzification  │
└─────────────────┘
         │
         ▼
┌─────────────────┐
│   Rule Based    │
│    inference    │
└─────────────────┘
         │
         ▼
┌─────────────────┐
│  Deuzzification │
└─────────────────┘
```

FIG. 1

| Identify the current state | Select & execute an action | Observe Reinforcement | Update the state-action value function |
|---|---|---|---|
| S1 | A1 | R1 | $Q(A1,S1) \leftarrow R1$ |

| Identify the current | Select & execute an action | Aggregation of Fuzzy Rules | Observe Reinforcement | Update the state-action value |
|---|---|---|---|---|
| S1 S2 S3 S4 | A1 A2 A3 A4 | A_All | R_All | $Q(A1,S1) \leftarrow ?$ $Q(A2,S2) \leftarrow ?$ $Q(A3,S3) \leftarrow ?$ $Q(A4,S4) \leftarrow ?$ |

FIG. 2

FIG. 3

| State | Firing Strength | Rules' Consequent (Output) | Fired output Membership Function | State | Firing Strength | Rules' Consequent (Output) | Fired output Membership Function |
|-------|-----------------|---------------------------|----------------------------------|-------|-----------------|---------------------------|----------------------------------|
| s2 | 0.25 | Decrease | | s11 | 0.1 | Increase | |
| s3 | 0.1 | No Change | | s12 | 0.05 | Little Decrease | |
| s6 | 0.1 | Little Increase | | s14 | 0.1 | Decrease | |
| s7 | 0.05 | Little Decrease | | s15 | 0.25 | Increase | |

Final Crisp Output

FIG. 4

FIG. 5

FIG. 6

EP 2 413 269 A1

FIG. 7A

FIG. 7B

Europäisches
Patentamt

European
Patent Office

Office européen
des brevets

# EUROPEAN SEARCH REPORT

Application Number

EP 10 36 0032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,P | ROUZBEH RAZAVI ET AL: "A fuzzy reinforcement learning approach for self-optimization of coverage in LTE networks", BELL LABS TECHNICAL JOURNAL, WILEY, CA, US, vol. 15, no. 3, 1 December 2010 (2010-12-01), pages 153-175, XP001558911, ISSN: 1089-7089, DOI: DOI:10.1002/BLTJ.20463 * the whole document * | 1-13 | INV. G06N99/00 |
| X | BONARINI A ET AL: "Reinforcement distribution in fuzzy Q-learning", FUZZY SETS AND SYSTEMS, ELSEVIER SCIENCE PUBLISHERS, AMSTERDAM, NL, vol. 160, no. 10, 16 May 2009 (2009-05-16), pages 1420-1443, XP026070732, ISSN: 0165-0114, DOI: DOI:10.1016/J.FSS.2008.11.026 [retrieved on 2008-12-06] | 1-4, 6-10,12, 13 | |
| A | * the whole document * | 5,11 | TECHNICAL FIELDS SEARCHED (IPC)<br><br>G06N |

The present search report has been drawn up for all claims

| Place of search | Date of completion of the search | Examiner |
|---|---|---|
| The Hague | 19 January 2011 | Valencia, Erika |